# EUROPEAN PATENT APPLICATION

(11) **EP 2 887 044 A1**
(43) Date of publication of application: **24.06.2015**
(21) Application number: 13198258.9
(22) Date of filing: 19.12.2013
(51) Int. Cl.: G01M 11/00

(54) **Method and system for stimulated Brillouin scattering threshold power measurement**

(71) Applicant: Rigas Tehniska Universitate, 1658 Riga (LV)
(72) Inventor: Supe, Andis, LV-4101 C sis (LV); Pori , Jur is, LV-1011 R ga (LV); Ivanovs, irts, LV-1009 R ga (LV)
(74) Representative: Osmans, Voldemars

(57) **Abstract**

A system for stimulated Brillouin scattering threshold power measurement in an optical fiber (28) comprising: a laser light source (10), a power meter (20) connected to the laser light source and configured to measure the light source output optical radiation power; an optical circulator (22) having an input port (34), common port (36) and output port (38), a first and second optical connectors (24, 26) adapted for connecting the optical fiber (28); wherein the laser light source (10) is connected to the input port (34), and the first optical connector (24) is connected to the common port (36) of the optical circulator (22); whereas the output port (36) of the optical circulator (22) is connected to a first optical spectrum analyzer (30), wherein the system further comprises a second optical spectrum analyzer (32) connected to the second optical connector (26).

## Description

### Technical field

This invention relates to optical fiber parameter measurements, more specific, to determination of stimulated Brillouin scattering threshold power in optical fibers.

### Background art

Brillouin scattering is the nonlinear optical effect that causes significant additional losses to optical signal transmission in the fiber. Furthermore this effect occurs only when a specific optical signal power level is reached. This power level usually is called the stimulated Brillouin scattering (SBS) threshold power. For different optical fibers, the stimulated Brillouin scattering threshold power differs, therefore there is a need in actual measurements to determine it.

A traditional experimental setup for the SBS threshold measurement is based on an optical circulator that is used to separate an initial continuous wave laser radiation from the backscattered optical flow from the optical fiber under test. Then it is possible to compare the optical signal power level at the fiber output with the backscattered component power and determine the threshold power for the Brillouin scattering process.

For example, in a traditional experimental setup for the SBS threshold measurement, described in [AL-ASADUI, H. A., et al. Particle swarm optimization on threshold exponential gain of stimulated Brillouin scattering in single mode fibers. Optics Express. 31 Jan 2011, Vol.19(3):1842-53*.],* a pump wave is launched into a single mode fiber through an erbium doped fiber amplifier and circulator. The amplifier is connected to a first port (input port) of the circulator. The fiber under test is connected to a second port (common port) of the circulator, and the backward scattering power is measured by an optical spectrum analyzer (OSA) at a third port (output port). The same optical spectrum analyzer is used for measuring the pump power at the first port.

An optical fiber under test in the measurement scheme is connected to the optical circulator common port (second port) using a mechanical connector. Consequently a part of SBS backscattered signal is reflected from that connector, and continue to propagate in the opposite direction--in the same direction as the initial optical radiation--and eventually will reach the fiber end. Therefore measurement at the fiber input (at the output port of the optical circulator) doesn't show the entire backscattered signal power.

### Summary of invention

The obj ect of the invention is to improve the accuracy of the stimulated Brillouin scattering threshold power measurement in optical fibers.

In one aspect the invention provides a system for stimulated Brillouin scattering threshold power measurement in optical fibers according to claim 1.

In another aspect the invention provides a method for stimulated Brillouin scattering threshold power measurement in optical fibers. The method comprises the following steps:
a) providing a measurement scheme according to claim 1;
b) measuring optical power of a SBS generated backscattered component by the first OSA connected to the output port of the circulator;
c) measuring optical power of the SBS generated backscattered component reflected from the first optical connector by the second OSA connected to the second optical connector;
d) determining the total optical power of the SBS generated backscattered radiation as the sum of two optical powers determined in steps b and c.

The proposed system and method for SBS threshold power measurement enables measurement of an initial optical signal as well as SBS generated backscattered component optical power at the fiber input and output. The optical spectrums obtained from fiber input and output are used to determine the total SBS backscattered optical power as the sum of two powers determined from the measured spectrums.

The main advantage of this approach is that reflection from the connector linking the circulator common port and the fiber under test does not influence the SBS threshold power measurement precision since the reflected part of the backscattered signal is registered by the OSA connected to the fiber output. The second connector that links the fiber output with the OSA also introduces reflection, but its influence is an order of magnitude smaller compared to the first one. Consequently the overall measurement precision is improved compared to typical measurement schemes where SBS component power is measured only at the input of the optical fiber.

Advantageously, for the SBS component power determined from the fiber output the fiber losses may be taken into account.

### Brief description of drawings

FIG. shows SBS threshold power measurement scheme according to the invention.

### Description of embodiment

Proposed measurement scheme is based on the use of an optical circulator 22 to separate the forward optical flow from the backscattered one due to stimulated Brillouin scattering (SBS) process occurring in the fiber under test (FUT) 28. Light is generated using external cavity (ECL) laser 10 operating in the incessant irradiance regime or so called continuous wave (CW) mode. Laser output power is set to 10dBm. The output of the laser 10 is connected to an erbium doped fiber amplifier (EDFA) 12 that amplifies the light. A variable optical attenuator (VOA) 14, is connected after laser 10 to set certain power levels of the optical radiation to be sent to the fiber 28 via the circulator 22. Necessary power levels depend on the fiber under test. The optical filter 16 removes the noise of laser 10 and EDFA 14, otherwise the noise broadens the initial signal spectrum and therefore influences the threshold power measurements. In the present setup the filter bandwidth at full width half maximum (FWHM) is 0.5 nm, but filters with narrower bandwidth can also be deployed. After the filter follows an optical splitter 18 that splits optical flow into two outputs with a ratio 1 to 99%. Output with 1% of total light is connected to an optical power meter 20, which is used for monitoring the level of optical radiation sent to the FUT 28. Other output of the splitter 18 containing 99% of optical radiation is connected to the input port 34 of the optical circulator 22. The common port 36 of the circulator 22 is connected to the FUT 28 using an optical connector 24 while the output port 38 of the circulator 22 is connected to a first optical spectrum analyzer (OSA) 30 to measure the SBS backscattered light. The optical spectrum analyzer is essential for these measurements to determine which part of the backscattered light is due to SBS. The FUT 28 is connected to another OSA 32 using an optical connector 26. The second OSA 32 at the output of the FUT 28 is used to measure the output optical radiation spectrum. The OSAs with a wavelength resolution of 0.01 nm and power level measurement accuracy ≤+/-0.4dB were used.

Measurement process first of all starts with setting up a certain power level of optical radiation to be sent to the FUT 28. This is done by adjusting the VOA 14 and simultaneously monitoring the power meter 20. Since the optical losses the optical circulator 22 on the path from the input port 34 to the common port 36 are known, the exact optical power at the input of the FUT 28 can be determined. The power at the input of the FUT 28 is in the range of 5 - 20 dBm, but the range can be wider for specific fibers with increased SBS threshold power. After the power level adjustment, the optical spectrums at the FUT 28 input and output are measured using the OSAs 30 and 32. Afterwards, the measurements are repeated for increased power levels at the FUT input until the backscattered SBS component is equal to the throughput initial light at the output of the FUT 28. The SBS component in the optical spectrum is downshifted from the laser frequency approximately by 11GHz (upshifted from laser wavelength by 0.09 nm) the precise value depends on the FUT 28. Both OSA spectrums are used to determine the SBS threshold power that is the input power at which the initial optical radiation power at the FUT output is equal to SBS backscattered component power. Most of the backscattered light goes to the OSA 30, however the optical connector 24 used to connect the FUT 28 to the measurement scheme can cause undesired reflections, therefore part of SBS backscattered optical flow continues to propagate in the direct direction together with the initial flow of light. This part of SBS backscattered light will be registered in the OSA 32 spectrum along with the initial light spectrum components. Therefore the total backscattered component power is determined as the sum of two powers measured using the OSAs 30 and 32 at the input and output of the FUT 28 and taking into account the fiber losses for measured SBS component at the output of the FUT 28. From the output spectrums measured using the OSA 32 also the initial light power is determined. This measurement setup increases the precision of the measured SBS threshold power since the possible reflection in the optical connector 24 is taken into account.

### Industrial applicability

The present invention may be utilized for the SBS threshold power measurements in optical fibers. The invention provides for an improved accuracy and reliability of the threshold power determination.

### Reference signs list

- 10: CW - Laser
- 12: Amplifier
- 14: VOA
- 16: Tunable filter
- 18: Splitter
- 20: Power meter
- 22: Circulator
- 24: Optical connector
- 26: Optical connector
- 28: Fiber under test
- 30: OSA
- 32: OSA
- 34: Input port
- 36: Common port
- 38: Output port

### References

- AL-ASADUI, H. A., et al. Particle swarm optimization on threshold exponential gain of stimulated Brillouin scattering in single mode fibers. Optics Express. 31 Jan 2011, Vol. 19(3):1842-53.

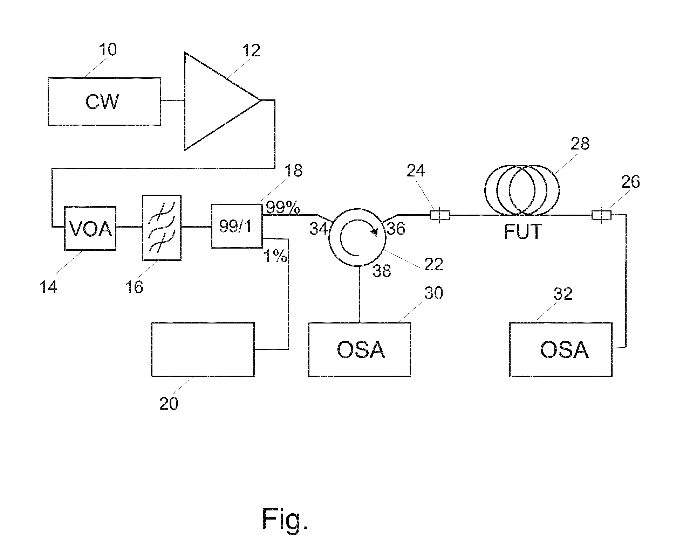

## Claims

1. A system for stimulated Brillouin scattering threshold power measurement in an optical fiber comprising:
a laser light source (10),
a power meter (20) connected to the laser light source and configured to measure the light source output optical radiation power;
an optical circulator (22) having an input port (34), common port (36) and output port (38),
a first and second optical connectors (24, 26) adapted for connecting the optical fiber (28);
wherein the laser light source (10) is connected to the input port (34), and the first optical connector (24) is connected to the common port (36) of the optical circulator (22); whereas the output port (38) of the optical circulator (22) is connected to a first optical spectrum analyzer (30), wherein the system further comprises a second optical spectrum analyzer (32) connected to the second optical connector (26).

2. The system according to claim 1 wherein the laser light source (10) comprises subsequently connected a laser (10), an optical amplifier (12), an optical attenuator (14), and a splitter (18) for connecting the power meter (20).

3. A method for stimulated Brillouin scattering threshold power measurement in an optical fiber comprising the following steps:
a) providing a measurement scheme according to claim 1;
b) measuring optical power of a SBS generated backscattered component by the first OSA (30) connected to the output port (38) of the circulator (22);
c) measuring optical power of the SBS generated backscattered component reflected from the first optical connector (24) by the second OSA (32) connected to the second optical connector (26);
d) determining the total optical power of the SBS generated backscattered radiation as the sum of two optical powers determined in steps b and c.

4. The method according to claim 3 wherein in determining the total optical power of the SBS generated backscattered radiation the losses in the optical fiber (28) are taken into account.
